# EUROPEAN PATENT APPLICATION

(11) **EP 2 416 464 A2**
(43) Date of publication of application: **08.02.2012**
(21) Application number: 11005544.9
(22) Date of filing: 07.07.2011
(51) Int. Cl.: H02J 1/10

(54) **Autonomous module of production, monitoring, storage, ripple and photovoltaic electric power distribution, method of communication and control management between modules when "off-grid" inserted**

(30) Priority: 07.07.2010 PT 10518910
(71) Applicant: Brito Dos Santos, Alfonso, Alberto, 2615-354 Alverca Ribatejo (PT)
(72) Inventor: Brito Dos Santos, Alfonso, Alberto, 2615-354 Alverca Ribatejo (PT)
(74) Representative: Vieira Barreto, Paulo

(57) **Abstract**

The following invention consists of a photovoltaic electric power production module, its monitoring, storage, ripple, distribution and its method of communication control and management between modules as each module, being equipped with a communication system, can communicate with other modules belonging to the same grid.

## Description

### Field of the Invention

The following invention consists of a photovoltaic electric power production module, its monitoring, storage, ripple, distribution and its method of communication control and management between modules as each module, being equipped with a communication system, can communicate with other modules belonging to the same grid.

### Prior Art

The current power production systems through photovoltaic cells have been developed based on those either concerning houses (small-scale devices) or higher surfaces for photovoltaic panels installation aimed to provide the power produced into the larger public power supply meant to be sold by energy distributors.

In the case of systems concerning houses and houses with fragile construction from the structural point of view, installing photovoltaic panels could become a most-likely impossible task. Thus, installing these panels on standalone structures at reasonable cost could be an option. This task can become even more difficult in lower population density areas due to not only to the need of higher investment but also to the inexistence of the possibility of sharing energy in a rational way.

As far as higher surfaces installation systems aimed to provide the energy produced for the larger distributed public power supply are concerned, its usage in remote locations is limited, since the cost of building of the infrastructure and its future monetary advantage makes it completely unfeasible.

In countries with large geographical areas with difficult access, and adverse and variable weather conditions throughout the year, the distribution of electric power becomes a difficult goal to attain, denying its use to most people in the world who this way cannot enjoy something essential for a good life and for their well-being.

### Advantages of the Invention

The aim of this invention is the production of photovoltaic energy, its monitoring, its storage, its ripple, its transformation and its distribution, to one or more households or other facilities, ensuring supply autonomy even in periods when production is not possible through this production method (at night or adverse weather conditions) in which each module which is equipped with a communication system where it can communicate with the others that are integrated in the same grid. This will report the system about the existing needs at every moment, making it possible to better manage the energy distribution depending on the storage capacity accumulated in the batteries of each module. This way, it is possible to fully make use of the production capacity, by either storing the produced energy which is not needed for immediate consumption or using the stored energy when the electric power needs requires it.

### Summary of the Invention

The following invention aims at the implementation of the photovoltaic electric power production module (hereafter designated as MAPEF), its monitoring, its storage, its ripple, its distribution and its method of communication control and between modules, having a metallic supporting structure attached to the soil, on which the photovoltaic panels are to be installed, incorporating a technical cabinet in which is housed all the necessary equipment to monitor, store, ripple and raise the voltage and distribute electric power through individual or collective systems.

Each MAPEF, having the ability to communicate with other MAPEFs (1) on the same grid, allows the existence of an intelligent monitoring over the loads in the distribution grid. This way, all the receivers can be fed for the longest time possible, depending solely on individual consumption and the amount of energy stored in the batteries of each MAPEF.

### State of the technique

Several related technique inventions spread the use of photovoltaic panels, inverters and storage batteries.

The WO 2008/124144, WO 2005/027300, U.S. 6311137 documents need to be referred to as they are the ones that contain the state of the technique which seems to be more similar to the contents of the following patent application even though there are some considerable differences.

The WO 2008/124144 document refers to a modular system based on a principle of photovoltaic panels usage with incorporated inverters that allow their association in order to increase the power available in an installation. Additionally, this invention makes it possible the incorporation of storage batteries. A communication system to manage the input/output of the photovoltaic panels is indicated, regarding the grid impedance. To sum up, it consists of a photovoltaic panel, comprising the generating function of the panel, the DC-AC inverter, small storage batteries and a control circuit to turn on/off the photovoltaic panel, all included in the package.

The module of this invention, in which the photovoltaic panel is used for current commercialization, which does not incorporate any inverter or communications device. Besides the difference mentioned above, this system differs from the present invention because, among other things, it manages the available power on AC depending on the in/out working of the photovoltaic panels (DC). It is a system that is not designed for grid- integrated use. On the contrary, the module of the present invention performs the power management on the grid based on the available loads of the storage batteries of each module, allowing efficient management of the loads to be provided into the utility grid. This difference is evident due to the fact that the invention WO 2008/124144 uses the inverter incorporated in each panel as the "master" to synchronize the in/out of the photovoltaic panels, whereas the module of the present invention does not use its inverter to monitor the grid. This function is performed by software integrated in the management and control of the communications that control the inverters of each module, depending on the loads of the storage batteries, grid malfunctions, etc. For this, each module of the present invention is given information about the grid status, (grid is defined as a set of interconnected modules with different loads), whereas the controller of the invention WO 2008/124144 uses daily, weekly, monthly energy production and power to be produced to control the in/out operation of the photovoltaic panels. Finally, and because the module of the present invention is geared towards functioning as a unit to interconnect with others in grids "not connected to the utility grid - named "off-grid" " each of these units has a voltage/current control of the distribution grid, as well as transformation to the voltages of normal use of the public distribution utilities, and protection on their outputs, unlike the WO 2008/124144 invention.

The WO 2005/027300 document refers itself to an invention that optimizes and maximizes the security of the interconnection between solar panels and increases the efficiency of a set of interconnected photovoltaic panels. For that, it uses two power grids (a DC - direct current - and the other an AC - alternating current) in which the DC level of the grid is expected to increase the voltage in order to reduce the losses of energy. This invention, unlike the present application, does not include the use of storage batteries, to provide power in a distribution grid. In spite of having the inverter concept, the communication bus concept and the photovoltaic panel concept, this invention takes into account that communication exists for the detection of photovoltaic panels malfunctions, as well as their in/out control command of the panels which transmits to the "master" inverter the results so that certain procedures can be adopted. Due to a greater or lesser number of PV panels connected to the grid, so there will be more or less energy in the AC grid. There is neither management of the stored loads nor the system is designed for grid operating, thus becoming adapted to installations that operate in isolation, which is not the scope of the invention of this patent application.

As far as the U.S.6311137 patent is concerned, the differences are striking, since it is a system that allows for power generation in a photovoltaic system, being this value obtained by multiple grid inverters, for subsequent sum and presentation in digital display, only for informational purposes, not triggering any subsequent control process.

### Detailed Description of the Invention

Each MAPEF is characterized by being a production, storage and low voltage electric power distribution product (400 VAC, three- phase, 230 VAC or 110 VAC, single phase, 50Hz/60Hz frequency), from solar energy, with the ability to communicate with the other MAPEFs (1) existent on the same grid.

Each MAPEF (1), shown in the operating scheme of Picture 6, consists of six distinct blocks, associated in a single metal structure: Generator (photovoltaic panels) (8), Load Regulator (DC/DC converter) (12), Storage Batteries (13), Inverter (Inverter DC/AC) (14), Transformer (29) and a Distribution Module made up by the inverter control (15), by the available communications (16), in case the MAPEFs (1) are installed in a grid system, by the Voltage/current control (17) and by the distribution grid (18). The generating function is performed by solar panels (8), arranged in suitable structure; the load regulator (12) ensures the correct loading of the storage batteries (13); the storage batteries (13) store the power produced by the generating element (8); the inverter (14) transforms the energy stored in the storage batteries (13) (continuous current) into electric power (alternate current), whose voltage will be increased by the transformer (29), to be used by daily use receptors(household appliances, lighting, etc..); the distribution (18)ensures that the power circuits in low voltage (alternating current), are properly protected to prevent accidents that could jeopardize the safety of people and equipment.

The upper part of the MAPEF (1) is made up of a set of photovoltaic panels (8) arranged side by side (array) and connected in a way that the voltage that is generated at its terminals can be suitable for charging the storage batteries (13). This structure of photovoltaic panels (8) is sized to withstand the stresses resulting from the wind to an exposed surface up to 20 m². The angle of inclination of the collectors (photovoltaic panels 8), which is a function of the geographic latitude of the installation, is set at installation time, through a system of rulers with the inclination marking of the angles.

The bottom part as shown in pictures 7, 8, 10, 11, works as a technical cabinet (10) whose interior is divided into three distinct areas:
a) The front area, represented in Pictures 7 and 8, and whose scheme is shown in Picture 9, is home to the technical panel which includes the supply equipment of the electronic power devices (19), communication (16), inverters (14), of regulation (12), as well the isolation device (21) of the continuous current (21), and the protection devices (20) of the grid alternating current.
b) The back area, shown in Pictures 10 and 11, and whose scheme is shown in Picture 12, where the equipment that increases the electrical voltage converted by the inverter (14) is located, with the right voltage to be used by the household appliances equipment or others, meaning the transformer (29), and the protection devices of the energy output circuits, i.e., the electrical cabinet (23) with the safety differential switch (24) and circuit breaker (25) of all the electrical circuits of distribution, and the access to energy meters, as shown in the scheme in Picture 12.
c) The side area is intended to power plug-ins (not shown), in case the connection to consumers is made by using these ones.

The system of base production and storage is designed for a 6 kWh power, constant throughout the year, so for this level of consumption it was decided to use batteries with a nominal rated capacity for a 48 V DC voltage; having in mind the following premises, the connection of photovoltaic panels should be such that in their terminals the voltage exceeds 48 V to allow recharging.

However, the power may be modified by changing the capacity of the generator (photovoltaic panels), ensuring that the maximum voltage available is not less than 48 VDC.

This results in two panels to be series installed (about 25 V DC per panel according to the conditions of nominal operating temperature in the cell of the module), which makes a total of 50 V, the maximum power point.

To ensure the current with the required load for charging the battery pack, the manufacturers of photovoltaic panels indicate the amount of the produced current in the CTS reference conditions which seldom occur, thus for the overall calculation of the type of panels to be used the conditions of the nominal operating temperature of the cell module are taken into account.

The global sizing of the number of photovoltaic panels to be installed in the structure will vary depending on the characteristics of the consumption to be achieved, taking into account the physical limitation of the 20 m² area. With this knowledge, you can get the number of panels depending on nominal power.

Once you determine the amount of photovoltaic panels (8) placed on the upper structure, they are interconnected and connected to a 30 diodes bus whose function is to prevent photovoltaic panels (8) to behave as loads causing consumption of accumulated energy during night time and thus act as locking devices. The load regulator (12) is connected to this bus, whose function is to monitor and command the loading of the storage batteries (13) that will accumulate the energy produced by photovoltaic panels (8).

For power to be used by potential consumers, particularly in household appliances and lighting, then it will be necessary to convert the electric signals accumulated in the DC storage batteries (13), into electric signals AC, adjusting this to the frequency and voltage level that is connected to the grid through inverters (14) and the transformer (29).

After the electric signals are converted to AC, and the frequency and voltage levels for use are set (400 VAC, 230 VAC or 110 VAC), we can proceed to their distribution.

The types of photovoltaic panels (8), load regulators (12), storage batteries (13) and inverters (14), may be changed depending on the loads that are intended to be fed, the intended autonomy and the characteristics of the distribution grid.

The number of transformers (29) may vary between one and three, depending on the MAPEF (1), if it is prepared to feed a single phase or three-phase loads.

This modular system allows each MAPEF (1) to work in an individual way, not sharing loads that are not fed directly by itself (directly loads are all those that are protected by the distribution system itself, integrated into the equipment) or in the grid, sharing loads that are not fed directly by itself.

In this last operating system, in addition to the six blocks described above, there is a seventh block, whose schematic principle is shown in Picture 14, which is dedicated to control the inverter (15), to the acquisition of signals (17), to communication (16) and response depending on the status of the distribution grid (18). All these elements are part of the intelligent module that enables the sharing of electric loads between MAPEFs (1).

The flow of information between the various modules is initially provided by the communication between microcontrollers, whose scheme is shown in Picture 18.

Microcontroller 3 performs the function of the internal management of the module, as among other tasks, it keeps the grid inner status table updated based on the information received from the grid through microcontroller 1. Microcontroller 2 shall be responsible for acquiring signals from the grid and the module itself, and command the inverter.

In a second stage simultaneous to the first one, communication with the grid take place according to a flow of information, outlined in Pictures 19, 20 and 21.

The control inverter (15) consists of three operating stages: the Power Stage, the Command Stage and the Communication Stage.

The Power Stage is developed by a structure based on full bridge of IGBT transistors, led by two independent" drivers" for IGBTs with neither additional control circuits nor in dead time.

For the Stage Command, a microcontroller is used to command two independent "drivers" for IGBTs. The control will be the result of voltage and current measurements that will be taken out of each MAPEF (1), as well as on the distribution grid (18). The voltage and current measurements will be taken by AC 27 transistors, whose resulting greatness will be converted by a A/D (analog-to-digital) converter in order to be interpreted by the microcontroller. Depending on the status readings of either the MAPEF (1) or the distribution grid (18), then the control of the inverter (15) will be controlled through the "drivers" associated with each IGBT transistor.

For the Communication Stage (16), whose schematic principle is shown in Picture 14, and whose block diagrams of the scheme of communication control and management between MAPEFs (1) are shown in Pictures 15, 16, 17 and 18, the predicted communication system is a system based on microcontrollers. The control of the inverter (15) has got a microcontroller dedicated to control itself, and the system that performs the interface between the inverter control (15).The grid will also be ensured by another microcontroller with different characteristics from the one used to control the inverter (15). This series communication is internal within the same MAPEF (1), and can be applied to isolated operation and grid connected. In addition, and valid only for the grid connected, in the communication between MAPEFs (1) (outdoor) it is used the CANbus system (26) (ECAN protocol) for transmission times up to 4µs (250 kbps), allowing distances between MAPEFs (1) up to 250 m. It uses a high traffic system (high number of messages sent and received on MAPEFs (1)), with a high amount of information.

Communication between the various microcontrollers is shown in Picture 18 and described in the following paragraphs.

Each MAPEF (1) has got two communication systems: a serial-type system that uses the UART system of communication of microcontrollers, which allows the "dialogue" between the microcontroller that integrates the control command of the inverter (15) (µC2) and a second microcontroller integrating the communications interface (µC1); a CANbus communication system (26) between different MAPEFs (1), in which a microcontroller is used which integrates the communication interface.

The aim of the first communication system is to allow communication of the values of voltages and currents in the DC bus (voltage/current battery supply) and AC (voltage/current inverter output) in order to maintain an updated table in the last one and receive in the microcontroller that integrates the inverter control (14) the start and stop commands that are generated in the microcontroller of the communication interface. One should pay attention to the fact that there is the possibility of blocking the PWM output of the microcontroller that integrates the control of the inverter (15) via a pin-inhibition (called FAULT_A) by protecting the Power Stage. The microcontroller that integrates the inverter control (14) sends 4 bytes (each one referring to a magnitude of a total of 256 possible values) and receives one byte (start, stop commands, or null). The transmission speed serial is 19,200 bps.

In the second communication system, the communication strategy follows the following methodology:
One of the MAPEFs assumes the task of "master" (the word "master" defines the MAPEF (1)that heads the operation of the entire grid, and all the other active MAPEFs (1) are called "slaves"), MAPEF (1), the "master", is designated as the first of the grid, but may be disqualified and become a temporary "slave" in case it does not have battery power backup or has a malfunction; in this situation, one of the "slaves" will temporarily take over the role of "master".

The basic principle for assigning the "master" function is given by the identifier that the operator sets up in an initial grid configuration. The identifier or ID is a word with 5 bits, resulting from the value "read" by µC3 of a switch that is set. Each ID must be unique, and the lowest ID grid will allow the module to be assigned as "master".

The qualification/disqualification of modules from "master" to "slave" and vice versa is a constant in the grid when operating according to the following criteria and to the management of the process as in Pictures 19, 20 and 21.

The criteria are as follows:
- Module identifier or ID (the smallest ID of the operating modules is the "master")
- The module with shorter operating time
- The module with more load on the main batteries
- The module with "ON" or "IDLE" condition

First, the MAPEF "master" constantly inquires the grid in order to find out which of the MAPEFs (1) are active, and in what status; then a choice is made from the MAPEFs (1) which should start working by selecting those that have the best performance, and likewise, which have to stop working due to their poor performance. This selection is related to the available stored loads, no malfunctions, etc..; simultaneously, through the current transducers that are installed in the grid the amount of the load is evaluated, so as to choose among the best, which are likely to start working, and likewise, which ones among the worst should stop working. These tasks are carried out in a dynamic way; to implement this system in a decentralized way by creating a common table, which is transmitted to all MAPEFs (1). The status of the grid kept in the common table, is stored in EEPROM (Electrically Erasable Programmable Read-Only Memory) and exists in each MAPEF (1), being one of the communications devices (16).

The structure of the information stored in the EEPROM is identified in Picture 20.

The first two bits are kept aside for the identification of the type of module ("master" or "slave"), the next five bits keep the value of the module identification, the serial number of that module is stored in the next byte, the next 5 bit keep the operating time of the module updated; the next three bits are responsible for keeping the load level of the main batteries; the next two bits identify the condition of the grid module (ON, OFF, IDLE or UNKNOW); the last bits are also kept aside so that the "master" module can always keep all the modules under surveillance.

This table keeps record of the condition of the grid and of all MAPEFs (1) and is managed by the "master" module. As there is a certain time of transmission between MAPEFs (1), there will be a predicted minimum time between starting and stopping the inverters (15) in order to avoid transient anomalies. This stage of communication is also controlled by a microcontroller, using the CANbus protocol (26). With this system, each inverter control (15) of each MAPEF (1) is interconnected between themselves through a conductor cable with termination resistors as shown in Picture 14. The communication door will be of a RS232 type which will allow the interconnection of the MAPEFs (1) communications. The regulation of the electrical power available in the distribution grid will result from measures taken in the stage command and its transmission to the grid connected MAPEFs (1). When operating individually, there is no communication with the CANbus protocol (26).

The output power into the distribution network and the automatic entry into operation of MAPEFs (1) will depend on the specific needs of power in the grid, resulting from the existing consumption and the load availability stored in the storage batteries (13) of the MAPEF (1) so that it can contribute with power. Once these conditions are met, the module will start working, will carry out self synchronization to enter the grid. This synchronization is performed by sending a clock signal in real time - RTC, so the whole grid can operate under the same voltage and frequency standards.

For all the control system, command and communication to remain operational, in case the storage batteries (13) are discharged, each MAPEF (1) has an autonomous supply system through the backup battery which will be kept at the nominal load, thanks to the implementation of a DC/DC battery charger to charge the backup storage battery (13) (12V/7Ah). All the auxiliary systems are kept working in priority with the load available in the main storage batteries (13); the backup battery only starts working when they are empty. This management is ensured by microcontroller 3, associated to an alphanumeric device (LCD) to enable communication between the operator and the system. The global settings of the MAPEF (1) are stored in the EEPROM of microcontroller 3. Only skilled operators can make a MAPEF (1) work, that is why each MAPEF (1) has a numeric keypad to enter the access code in order to activate its operation.

### Description of the method of control and management of the communications between MAPEFs when inserted in a non-public power supply grid ("off-grid" system)

Once the system is initialized, it starts working when a code is introduced and validated.

If the code is entered incorrectly, the MAPEF is taken out of service, being this information transmitted to the user through an alphanumeric LCD display.

If the code is entered correctly and the backup power supply system becomes operational, an "ENABLE" signal is sent to microcontroller 1, starting the communication cycle, between both "master" MAPEF (1) and the "slave" MAPEFs (1), by using the communications made through CANbus protocol (26). These communications are made through 6 bytes messages in which the first 2 bytes identify the ID of the MAPEF (1) and the remaining 4 bytes the message itself.

When the module begins to be installed in the grid, it still does not know whether it will be the "master" or the "slave". Thus, the first communication step is to check if the module is the only module in the grid or if there are already others. In this situation, a message with the "PING MASTER" ID will let you know if there is already a "master" module in the grid.

With a positive answer, and once the smallest ID is mandatory to identify the "master" module, the new module that searches for its grid authentication, requests a message to the existent "master" module in relation to its ID.

The module with the lowest ID will take over the role of "master" even if the existent module will be or will no longer be the "master".

The MAPEF (1) "master" will send a message destination with the MAPEF ID identification, a message without specific contents, with the aim of obtaining data on the state of all "slave" MAPEFs (1). When each MAPEF (1) gets a message, it interrupts the ongoing process by sending the MAPEF (1) "master" a message with its current state, and ignores the previous message for not having contents for processing.

When the MAPEF (1) "master" receives from each MAPEF (1) "slave" the information about their state it builds an internal table of system states that will become the basis for managing the system, thus sending each MAPEF (1) "slave" the command start/stop, a command which is sent through microcontroller 2.

The state table is managed by the "master" module in charge. It is updated on a regular basis and reflects the condition of all the modules of the grid.

The "master" module will always take over this function as long as it has the capacity to maintain grid communications in continuous operation. This function will only be ensured if there is power in its backup battery; if that fails to happen, the "master" module will be disqualified, and the "slave" module with the lowest ID will be promoted to "master" as long as there is nothing that prevents it from happening.

The hierarchy of the grid exploration will be maintained.

Any of the modules has got four possible conditions in the grid:
- The "ON" condition happens when the module is in the grid and is injecting electrical power. In practice it is in normal exploration.
- The "OFF" condition happens when the module is disconnected from the grid due to operational reasons (or has got no load on the batteries, or has got a malfunction that prevents it from charging power from the grid), but it remains in communication with the "master" module.
- The "IDLE" condition indicates that the module is ready to operate with a simple command from the "master" module.
- The "unknown" condition results from a failure to communicate with the "master" module, so the respective inverter will be shut-down for safety reasons, and the intervention of the operator will be required to reactivate it.

When each "slave" MAPEF (1) receives the message from the MAPEF "master", it checks if the message is addressed to itself, ignoring it if it is not the case; if the message is addressed to it, it interrupts the ongoing process, and through the UART communication of microcontroller 1 to microcontroller 2, it executes the command received from the "master" MAPEF (1) by sending the "master" MAPEF (1) the current operation state, indicating the (on/off) state of the inverter (14) and the batteries load level.

This information will be transmitted to the CANbus network so it can be interpreted by other MAPEFs (1).

If you need to increase the grid power distribution, the MAPEF (1) "master", which has got the updated state of the grid, will send a synchronism signal to the grid (through a signal in real time clock - RTC), and a command to a certain MAPEF (1) that offers operating conditions. The reverse process will occur if it is necessary to reduce the grid power distribution.

Simultaneously, microcontroller 3 reads the voltage of the storage batteries (13), converting that value into an equivalent proportional signal to be interpreted by microcontroller 1. If the value of the reading is below the reference value, a message is sent to the LCD alphanumeric display with this information, and the routine is finished.

If the value of the reading is higher than the reference value, microcontroller 3 will then read the voltage of the backup battery. If the value of the reading is below the reference value, a message is sent to the LCD alphanumeric display with this information, and the routine is finished.

If the value of the reading is higher than the reference value, it is necessary to read the temperature by using a digital entry on microcontroller 3.

If there no temperature sensor, a message is sent to the LCD alphanumeric display with this information and the routine is finished. If the temperature sensor is present, it is checked if the temperature is below the predetermined temperature. If this temperature exceeds the predetermined reference temperature, forced ventilation is driven by a PWM speed control, allowing the temperature to fall down either in the IGBT power transistors or in the control system of the backup battery.

The dynamics of the communication between modules is always centred in the "master" module according to the principles already set out, taking into account the respective ID, the current state, the state of the batteries loads and the Presence State.

### Description of the method of communication control and management of the MAPEFs while operating autonomously

After initialization, the system starts when a code and its validation is introduced.

Microcontroller 2 reads the DC current/voltage in the MAPEF (1) module and through UART communication sends this information to microcontroller 1. If the current increases more than a predetermined value, microcontroller 1 gives instructions to microcontroller 2, through UART communication, to turn off the inverter.

If the value of current intensity is within the preestablished limits, one needs to check if the voltage is 90% inferior to the nominal voltage. Microcontroller 1 gives instructions to microcontroller 2 to turn off the inverter by using UART communication.

### Description of the Pictures

Picture 1 shows the first way to install a standalone system in which the MAPEF (1) is directly connected to a plug or to an electric meter or to houses (2) by using electrical cables (3).

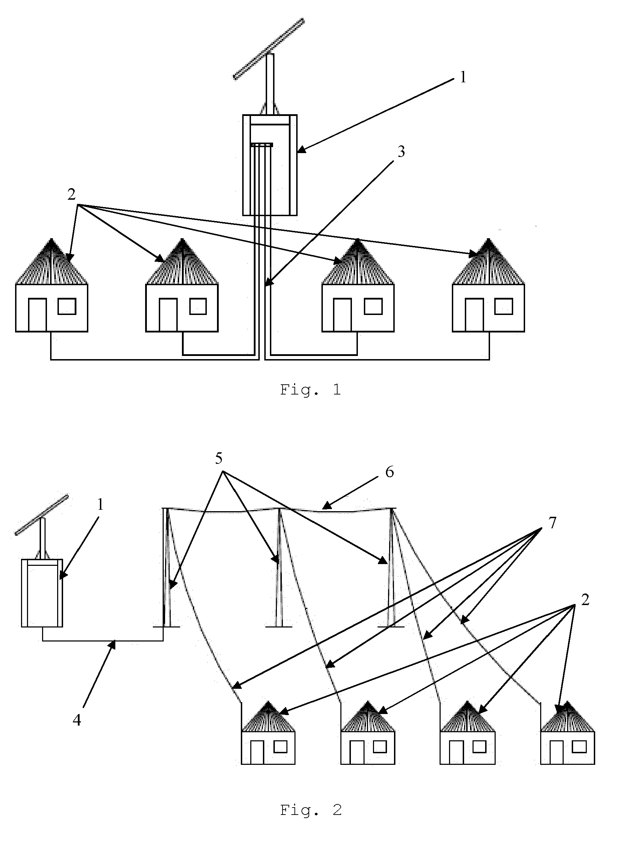

Figure 2 shows a second way of installing a standalone system, by using a low voltage grid distribution in which a MAPEF (1), through an underground cable (4), is connected to a distribution grid made up of wood or concrete electricity pylons (5), aerial cables (6 and 7) by aerial line connections to the houses (2).

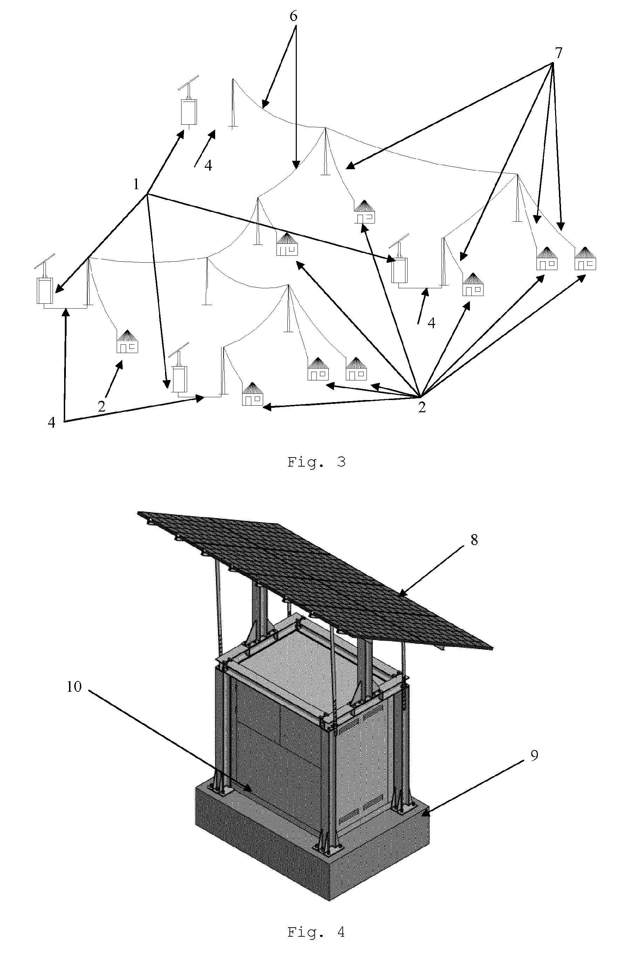

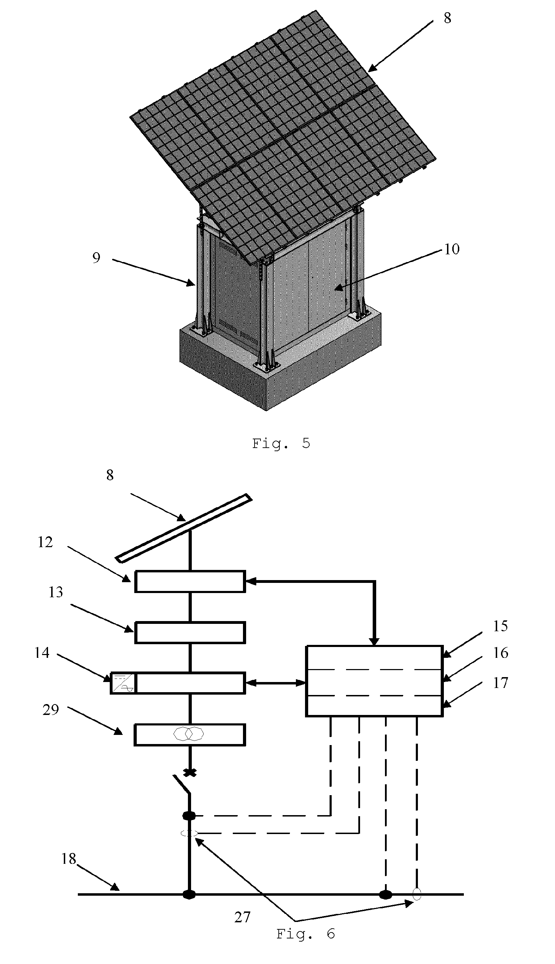

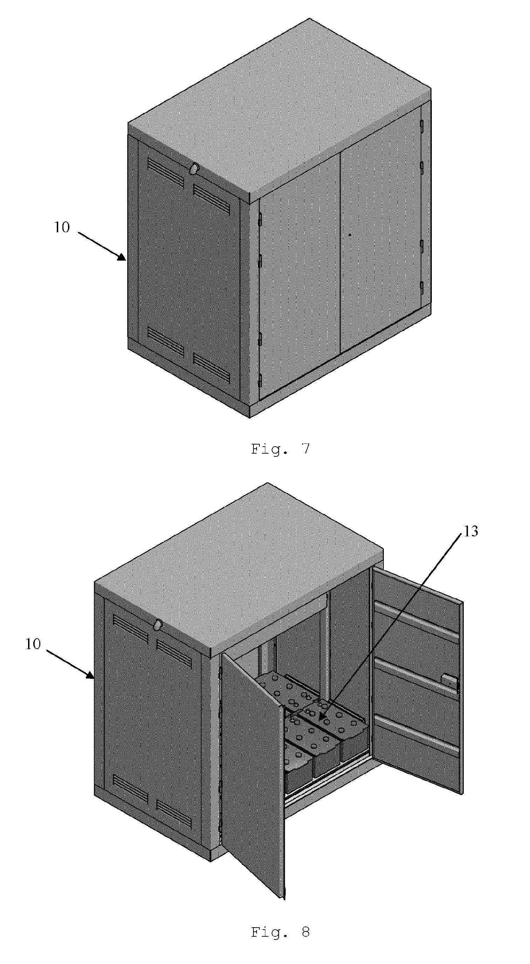

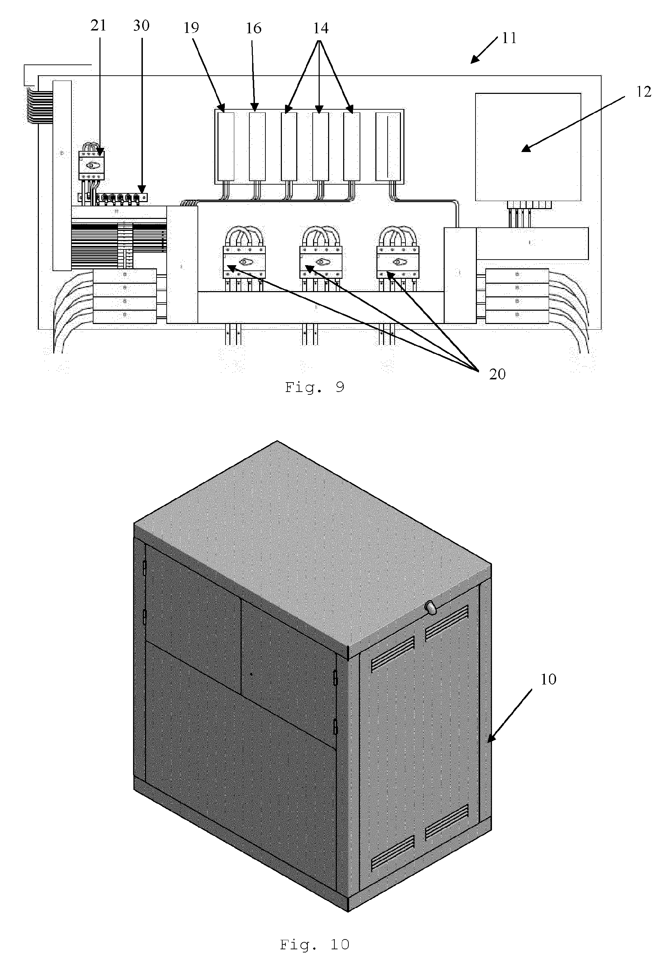

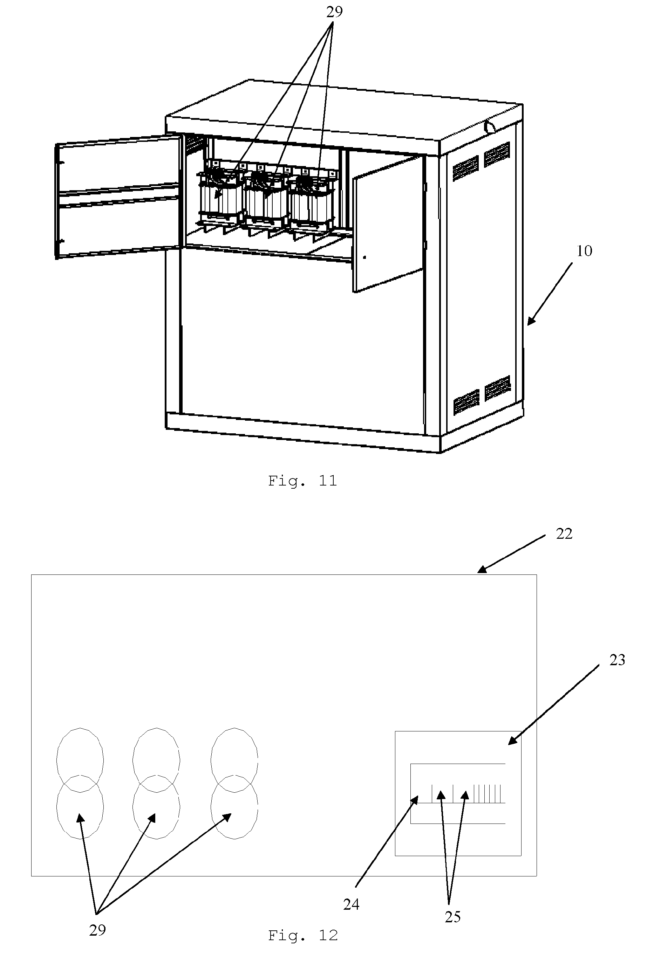

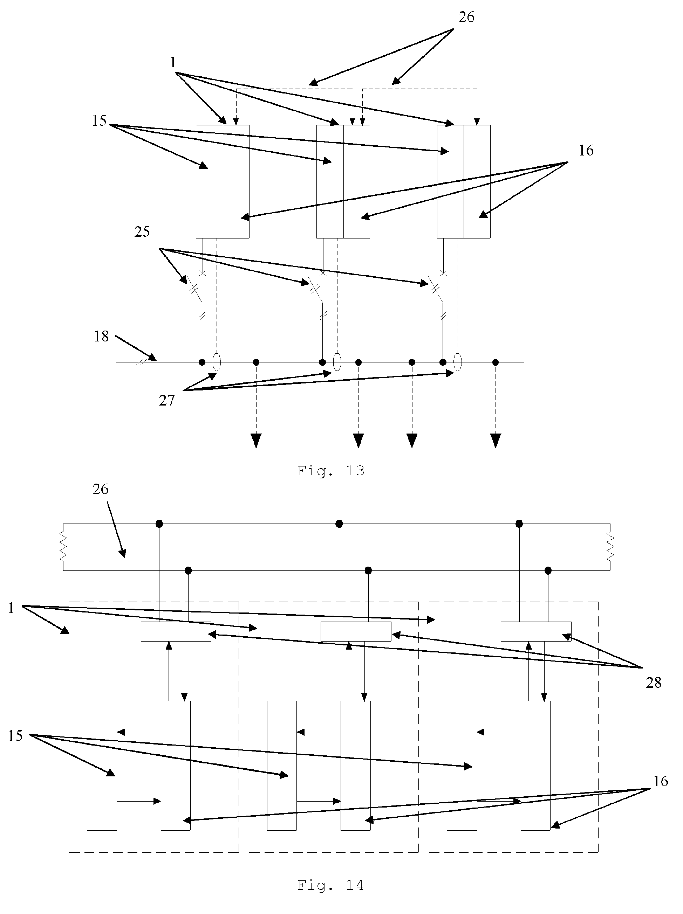

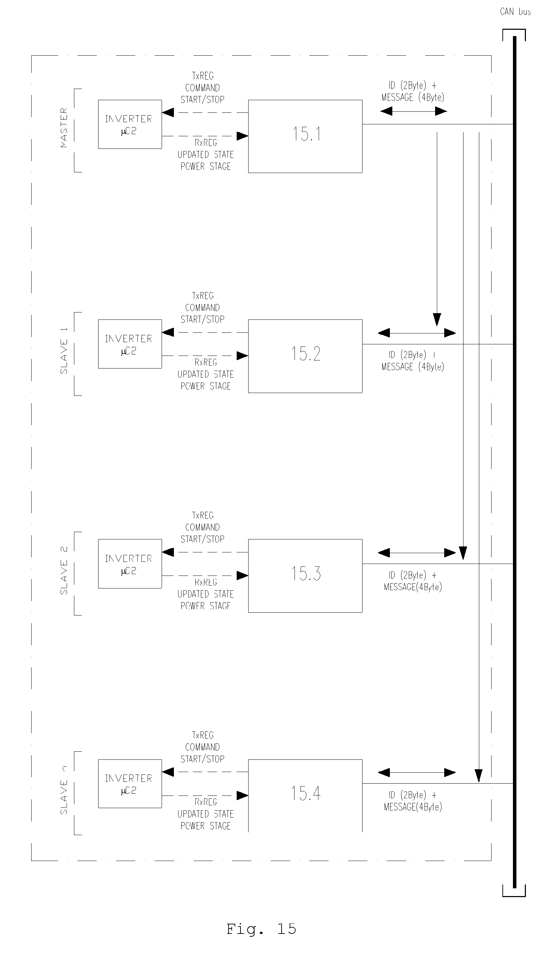

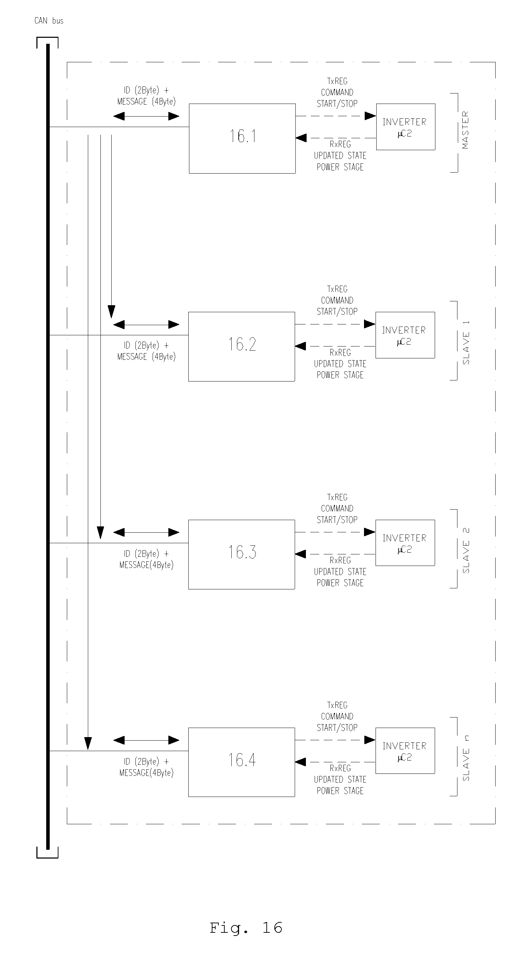

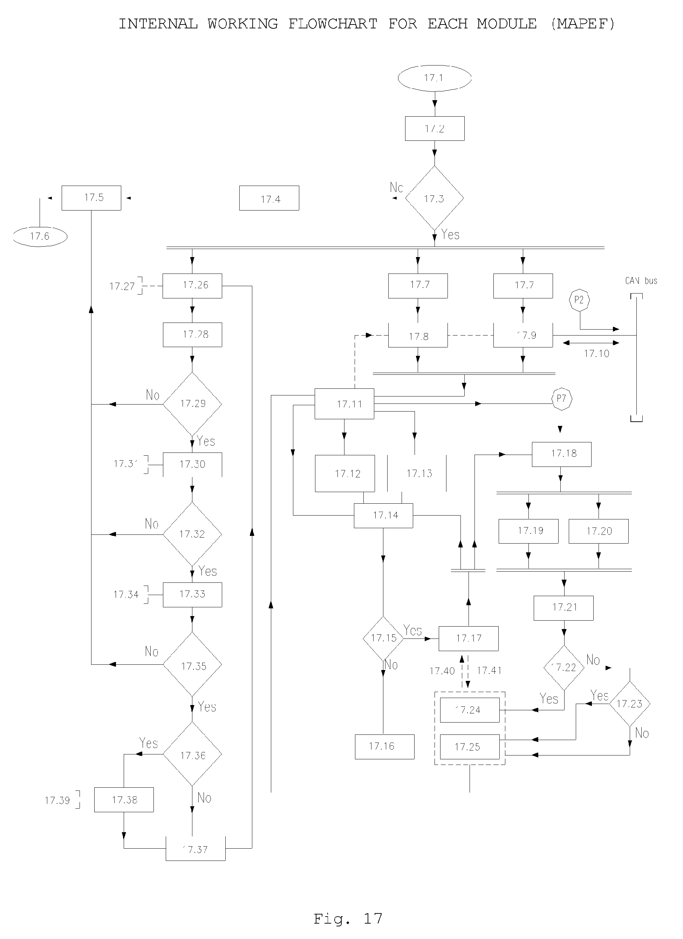

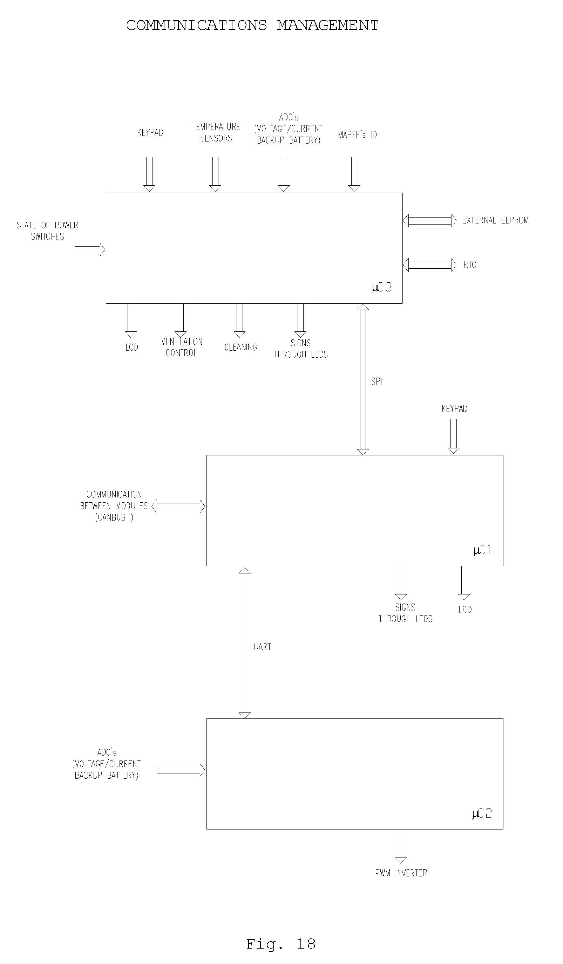

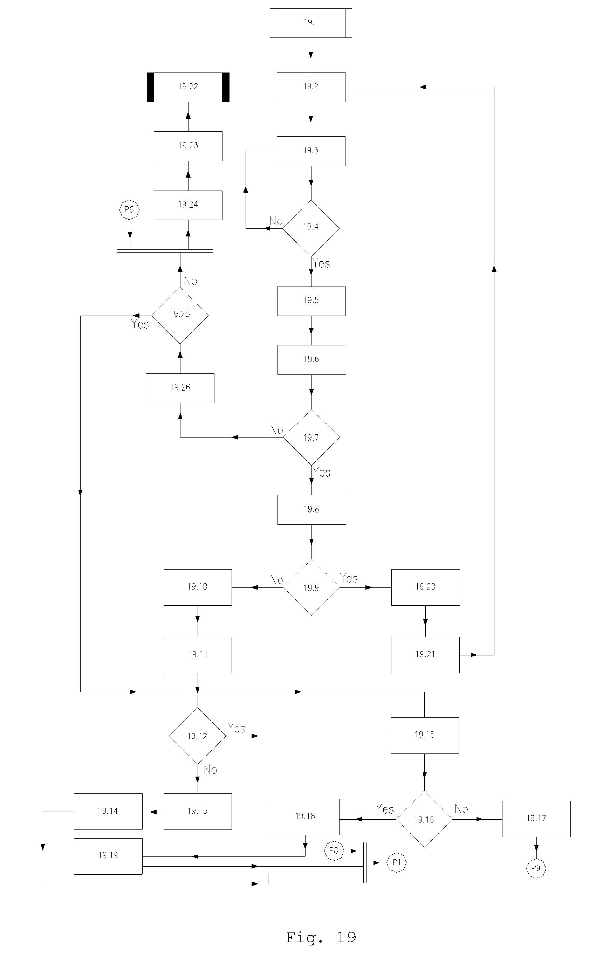

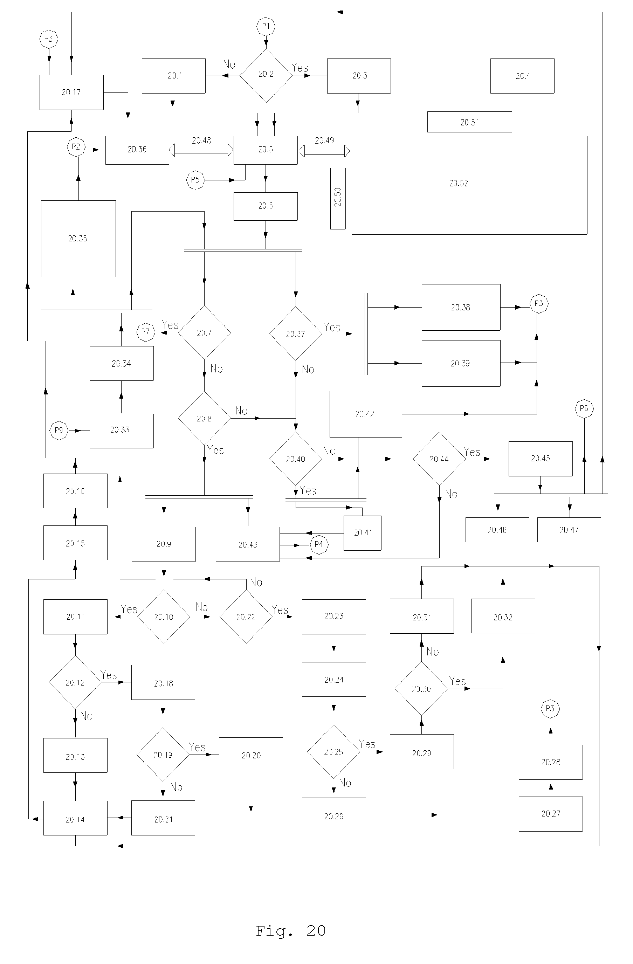

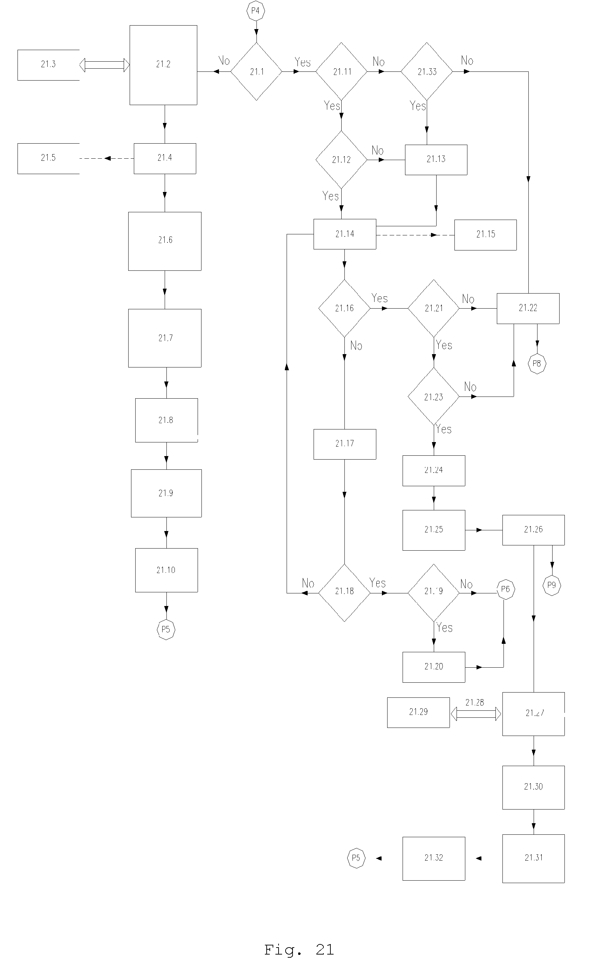

Figure 3 represents a third way of a grid-tied installation in which several MAPEFs (1), connected by underground cables (4), feed a distribution grid made up of wood or concrete electricity pylons (5), aerial cables (6) and by aerial line connections (7) connected to the houses (2).
Pictures 4 and 5 represent a front and a back perspective of the MAPEF (1) made up by the set of the photovoltaic panels (8) arranged side by side and linked together by the support structure (9), and the technical cabinet (10) houses the entire set of equipment necessary to regulate, store, undulate and distribute the electrical energy.
Picture 6 represents how the MAPEF (1) works.
Pictures 7 and 8 represent the front perspective of the technical cabinet (10) when closed and open, respectively, through which one can have access to the technical panel (11) whose scheme can be seen in Picture 9.
Picture 9 shows the scheme of distribution of the equipment in the technical compartment of the technical cabinet.
Pictures 10 and 11 represent a side and a front view of the technical cabinet (10), when closed and open, through which one can have access to the transformer (29) and to the distribution panel (22) which is not shown.
Picture 12 represents the implementation scheme of the transformer (29) and the location of the safety devices, placed on the front part of the technical cabinet (10), made up by the electrical cabinet (23) differential switch for safety protection (24) and circuit breakers (25).
Picture 13 represents the basic scheme of the two communication systems involved in each MAPEF (1) when grid operating; on the one hand, there is an internal communication between the control (not shown) of the inverter (14) and the microcontroller which has constructive possibilities of CAN communication, and on the other hand, communication between MAPEFs (1) that results from the CANbus protocol (26).
Picture 14 represents the operation scheme of communications in which the current transducers (27) monitor the loads of the distribution grid (18) that constantly vary with the power injected into the grid through the circuit breaker (25) and with the consumption of the loads. These values are interpreted by the microcontroller integrated in the inverter control (14). Once the current value in the grid is interpreted, the inverter (14) communicates with the communication module (16) via serial communication. When there is the need to increase power into the distribution grid (18) the MAPEF (1) communicates with the other grid-connected MAPEFs (1)through the communication system informing the grid that it will increase the power if there is stored energy in the storage batteries (13), or otherwise, it will send signals to the other grid-connected MAPEFs (1) informing that there is no possibility of increasing the loads, thus other grid-connected modules will have to take over this specific task. To allow CANbus communication (26), it is necessary to use a device that manages traffic information along the communication line. For this, the system is equipped with a transmitter/receiver (28) which will accomplish this task.
Pictures 15, 16 and 17 show diagrams of the control and management schemes of the communications between modules.
Pictures 18, 19, 20 and 21 detail the communications control and management system within the module and between grid-connected modules.

Texts matching pictures 15, 16 and 17 are presented below as they are not clear in them.

### Picture 15

15.1 E-CAN (MASTER)
   1 - SENDS SIGNAL TO GRID WITH DESTINATION IDENTIFICATION (ID) AND MESSAGE WITHOUT SPECIFIC CONTENTS
      AIM: GET DATA ABOUT THE STATE OF "SLAVE" MODULES
      NOTE: Always send a signal that there is "reset" of "MASTER" module
15.2 E-CAN (SLAVE 1)
   2 - WHEN THE MESSAGE IS RECEIVED AN INTERRUTPION IS TRIGGERED IN THE ONGOING PROCESS
   3 - "SLAVE 1" SENDS THE "MASTER" MODULE A MESSAGE WITH ITS CURRENT STATE
   4 - THE MESSAGE RECEIVED IN STEP 2 IS IGNORED FOR NOT CONTAINING CONTENT PROCESSING
15.3 E-CAN (SLAVE 2)
   2 - WHEN THE MESSAGE IS RECEIVED AN INTERRUTPION IS TRIGGERED IN THE ONGOING PROCESS
   3 - "SLAVE 2" SENDS THE "MASTER" MODULE A MESSAGE WITH ITS CURRENT STATE
   4 - THE MESSAGE RECEIVED IN STEP 2 IS IGNORED FOR NOT CONTAINING CONTENT PROCESSING
15.4 E-CAN (SLAVE n)
   2 - WHEN THE MESSAGE IS RECEIVED AN INTERRUTPION IS TRIGGERED IN THE ONGOING PROCESS
   3 - "SLAVE n" SENDS THE "MASTER" MODULE A MESSAGE WITH ITS CURRENT STATE
   4 - "SLAVE n" SENDS THE "MASTER" MODULE A MESSAGE WITH ITS CURRENT STATE

### Picture 16

16.1 E-CAN (MASTER)
   1 - RECEIVES INFORMATION FROM EACH MODULE ABOUT ITS STATE
   2 - DRAWING OF INTERNAL TABLE ABOUT THE STATES OF THE SYSTEM TO SERVE AS INFORMATION BASIS FOR SYSTEM MANAGEMENT
   3 - ISSUES EACH "SLAVE" A START/STOP COMMAND
16.2 E-CAN (SLAVE 1)
   1 - RECEIVES MESSAGE FROM THE "MASTER" MODULE
   2 - VERIFICATION OF ID TO IDENTIFY IF THE MESSAGE IS ADDRESSED TO THE REFFERED MODULE. IF THE ID IS NOT CORRECT, THE MESSAGE IS IGNORED
   3 - IF THE ID IS CORRECT THE ONGOING PROGRAM IS INTERRUPTED DONE TO EXECUTE THE COMMAND OF THE "MASTER"
   4 - SENDS THE "MASTER" THE CURRENT STATE OF ITS OPERATION
16.3 E-CAN (SLAVE 2)
   1 - RECEIVES MESSAGE FROM THE "MASTER" MODULE
   2 - VERIFICATION OF ID TO IDENTIFY IF THE MESSAGE IS ADDRESSED TO THE REFFERED MODULE. IF THE ID IS NOT CORRECT, THE MESSAGE IS IGNORED
   3 - IF THE ID IS CORRECT THE ONGOING PROGRAM IS INTERRUPTED DONE TO EXECUTE THE COMMAND OF THE "MASTER"
   4 - SENDS THE "MASTER" THE CURRENT STATE OF ITS OPERATION
16.4 E-CAN (SLAVE n)
   1 - RECEIVES MESSAGE FROM THE "MASTER" MODULE
   2 - VERIFICATION OF ID TO IDENTIFY IF THE MESSAGE IS ADDRESSED TO THE REFFERED MODULE. IF THE ID IS NOT CORRECT, THE MESSAGE IS IGNORED
   3 - IF THE ID IS CORRECT THE ONGOING PROGRAM IS INTERRUPTED DONE TO EXECUTE THE COMMAND OF THE "MASTER"
   4 - SENDS THE "MASTER" THE CURRENT STATE OF ITS OPERATION

### Picture 17

17.1 SYSTEM STARTUP
17.2 ENTER SYSTEM STARTUP CODE
17.3 CORRECT CODE?
17.4 OUT OF SERVICE MODULE
17.5 LCD MESSAGE
17.6 END OF ROUTINE
17.7 SEND "ENABLE" SIGNAL To µC1
17.8 "MASTER" MODULE - START CYCLE OF COMMUNICATIONS
17.9 "SLAVE" MODULE - CYCLE OF COMMUNICATIONS
17.10 ID (2 byte) + MESSAGE (4 byte)
17.11 COMMUNICATIONS MANAGEMENT AND CONTROL
17.12 E-CAN
   1 - RECEIVES MESSAGE FROM THE "MASTER" MODULE
   2 - VERIFICATION OF ID TO IDENTIFY IF THE MESSAGE IS ADDRESSED TO THE REFFERED MODULE. IF THE ID IS NOT CORRECT, THE MESSAGE IS IGNORED
   3 - IF THE ID IS CORRECT THE ONGOING PROGRAM IS INTERRUPTED DONE TO EXECUTE THE COMMAND OF THE "MASTER"
   4 - SENDS THE "MASTER" THE CURRENT STATE OF ITS OPERATION
17.13 E-CAN
   4 - SENDS THE "MASTER" THE CURRENT STATE OF ITS OPERATION
      PARAMETERS TO BE SENT:
      - STATE OF THE INVERTER (ON/OFF)
      - BATTERY CHARGE LEVEL
17.14 µC1 COMMUNICATION(CANbus)
17.15 RIGHT ID? µC1
17.16 IGNORE MESSAGE
17.17 UART COMMUNICATION FROM µC1 TO µC2
17.18 AUTONOMOUS OPERATION MODULE
17.19 V/I READING IN STORAGE BATTERIES / µC2 DISTRIBUTION GRID
17.20 CAPTURE OF CONTROL STATE OF µC2 INVERTER
17.21 UART COMMUNICATION TO µC1
17.22 I > IREF?
17.23 U < 0,9 UN?
17.24 UART COMMUNICATION FROM µC1 TO µC2- STOP INVERTER 17.25 UART COMMUNICATION FROM µC1 TO µC2- START INVERTER
17.26 MAIN BATTERIES
   READ VOLTAGE ()
17.27 ENTRY - AN2
   µC3
17.28 SIGNAL FITTING TO µC1 RESOLUTION
17.29 USOURCE > UREF?
17.30 BACKUP BATTERY
   READ VOLTAGE ()
17.31 ENTRY - AN0
   µC3
17.32 UBK > UREFBK?
17.33 ROOM TEMPERATURE
   READ TEMPERATURE ()
17.34 µC3 DIGITAL ENTRY
17.35 TEMPERATURE SENSOR PRESENT?
17.36 TEMPERATURE > 25°C
17.37 BACKUP BATTERY CHARGE CONTROL
17.38 START FORCED VENTILATION
17.39 PWM SPEED CONTROL
17.40 RxREG - ACTUAL STATE - POWER STATE
17.41 TxREG - COMMAND START/STOP

Texts matching pictures 19, 20 and 21 are presented below as they are not clear in them.

### Picture 19

19.1 COMMUNICATIONS MANAGEMENT SYSTEM
19.2 INITIAL MODULE CONFIGURATION BY OPERATOR µC3
19.3 SEND ID TO µC1
19.4 ID RECEIVED BY µC1?
19.5 INITIATE CONFIGURATION ROUTINE'S MODULE
19.6 TESTING PRESENCE OF "MASTER" MODULE SEND "PING MASTER" MESSAGE
19.7 SYSTEM SENT "PING MASTER REPLY"?
19.8 NEW MODULE SEND MESSAGE -"REQUEST ID"
19.9 IT's A EXISTING ID?
19.10 AUTORIZATION FROM "MASTER" MODULE TO USE THE NEW ID MESSAGE "GRANT ID"
19.11 COMPARE NEW ID WITH "MASTER'S"ID
19.12 NEW ID LOWER THAN "MASTER'S" ID?
19.13 NEW MODULE BECAME A "SLAVE" MODULE
19.14 UPDATE INTERNAL TABLE OF NETWORK STATE TYPE = "0" 19.15 NEW MODULE IS THE NEW "MASTER" MODULE
19.16 AUTONOMOUS MODULE OPERATING INSIDE NETWORK?
19.17 REQUEST NETWORK INFORMATION TO OTHERS MODULES
19.18 NEW "MASTER" MODULE OPERATING IN AUTONOMOUS STATE
19.19 UPDATE INTERNAL TABLE OF NETWORK STATE TYPE = "1"
19.20 ID REFUSED BY "MASTER" MODULE MESSAGE "DENY ID"
19.21 SEND MESSAGE ERROR TO NETWORK
19.22 ASK FOR OPERATOR SERVICE
19.23 SIGN OF ERROR
19.24 COMMUNICATIONS ERROR
19.25 MESSAGE "BUS TEST" RECEIVED
19.26 MODULE SEND MESSAGE - "BUS TEST"

### Picture 20

20.1 UPDATE INTERNAL TABLE OF NETWORK STATES ACTUAL STATE="OFF"
20.2 MAIN BATTERIES CHARGED?
20.3 UPDATE INTERNAL TABLE OF NETWORK STATE ACTUAL STATE = "ON"
TYPE = 1 - "MASTER" MODULE
TYPE = 0 - "SLAVE" MODULE
ACTUAL STATE = 11 - "ON"
20.4 ACTUAL STATE = 00 - "OFF"
ACTUAL STATE = 10 - "IDLE"
ACTUAL STATE = 01 - "UNKNOW"
CONT - KNOWLEDGE COUNTER
20.5 WRITE STATE OF NETWORK IN EEPROM µC3
20.6 TABLE OF NETWORK STATES UPDATED
20.7 MODULE OPERATING IN AUTONOMOUS STATE?
20.8 MODULE WITH LOWEST ID AND TYPE = "1"?
20.9 GET NETWORK'S VOLTAGE/CURRENT VALUES µC2
20.10 I > IREF ?
20.11 CHECK TABLE STATE MODULES WITH LOWER SOC AND ACTUAL STATE = "ON"
20.12 BOTH MODULES WITH SAME SOC?
20.13 SELECT HIGHEST SOC MODULE
20.14 SEND MESSAGE TO SELECTED MODULE IN ORDER TO STOP INVERTER
20.15 MODULE CHANGE ITs ACTUAL STATE TO "IDLE"
20.16 UPDATE INTERNAL TABLE OF STATES
20.17 WAIT t > t CAN
20.18 SELECT MODULE WITH HIGHEST OPERATING TIME
20.19 BOTH MODULES WITH SAME OPERATING TIME ?
20.20 SELECT MODULE WITH HIGHEST ID
20.21 SELECT MODULE WITH LOWEST OPERATING TIME
20.22 U < 0, 9 UN?
20.23 CHECK TABLE STATE MODULES WITH ACTUAL STATE = "IDLE"
24.24 SELECT HIGHEST SOC MODULES
20.25 BOTH MODULES WITH SAME SOC?
20.26 SEND MESSAGE TO SELECTED MODULE IN ORDER TO START INVERTER
20.27 MODULE CHANGE ITs ACTUAL STATE TO "ON"
20.28 UPDATE INTERNAL TABLE OF STATE
20.29 SELECT MODULE WITH HIGHEST OPERATING TIME
20.30 BOTH MODULES WITH SAME OPERATING TIME?
20.31 SELECT MODULE WITH LOWER OPERATING TIME
20.32 SELECT MODULE WITH LOWER ID
20.33 WAIT t > t CAN
20.34 INTERRUPT ROUTINE µC3
REQUEST STATE OF "SLAVE" MODULES
20.35
- ID
- OPERATING TIME
- STATE OF CHARGE <SOC>
- ACTUAL STATE
- PRESENT
20.36 COMUNICATION µC1
20.37 MODULE WITH LOWEST ID AND TYPE = "1"?
20.38 "MASTER" MODULE SEND UPDATE INTERNAL TABLE TO ALL MODULES IN NETWORK
20.39 "MASTER" MODULE SEND MESSAGE TO NETWORK "PRESENT"
20.40 MESSAGE "PRESENT" RECEIVED?
20.41 RESET INTERNAL VARIABLE "PRESENT"
20.42 "SLAVE" MODULE ANSWER "MASTER" MODULE MESSAGE "PRESENT"
20.43 GET BACKUP BATTERY SIGNAL µC3
20.44 VALUE VARIABLE "PRESENT" >= 255?
20.45 MODULE CHANGE Its ACTUAL STATE TO "UNKNOW"
20.46 UPDATE TABLE OF STATE
20.47 SEND MESSAGE TO STOP INVERTER
20.48 SPI
20.49 I2C
20.50 INCREASING ID
20.51 NETWORK TABLE OF STATES
EXTERNAL EEPROM STRUCTURE
20.52

| PE | ID | | | | | SERIAL NUMBER | | | | | | | | OPERATING TIME | | | | | State of CHARGE | | | ACTUAL STATE | | | CONT | |
|---|---|---|---|---|---|---|---|---|---|---|---|---|---|---|---|---|---|---|---|---|---|---|---|---|---|---|
| B2 | B1 | B2 | B3 | B4 | B5 | B1 | B2 | B3 | B4 | B5 | B6 | B7 | B8 | B1 | B2 | B3 | B4 | B5 | B1 | B2 | B3 | B1 | B2 | B3 | B1 | B2 |

### Picture 21

21.1 Ubk > UrefBK?
21.2 SELECT MODULE WITH
   - LOWEST ID AND <ACTUAL STATE "ON/IDLE" AND HIGHEST SOC OF MAIN BATTERIES>
21.3 WRITE INTERNAL TABLE EEPROM µC3
21.4 SEND MESSAGE TO SELECTED MODULE
21.5 COMMUNICATION µC1
   GET INTERNAL STATE OF SELECTED MODULE
21.6
   - OPERATING TIME
   - STATE OF CHARGE <SOC>
   - ACTUAL STATE
      UPDATE INTERNAL
21.7 TABLE OF STATES OF MAIN "MASTER" MODULE
   - OPERATING TIME
   - STATE OF CHARGE <SOC>
   - ACTUAL STATE "OFF"
   - TYPE = "0"
21.8 TRANSFERING "MASTER" COMMAND TO SELECTED MODULE
21.9 SEND MESSAGE TO NEW "MASTER" MODULE
   NEW ID ->TYPE "1"
   OLD ID -> TYPE "0"
21.10 UPDATE STATE's TABLE OF THE NEW "MASTER MODULE"
21.11 DOES THE MODULE HAVE THE LOWEST NETWORK'S ID?
21.12 "MASTER" MODULE?
21.13 MAIN "MASTER" MODULE READY TO MANAGE AGAIN THE NETWORK
21.14 MODULE SEND MESSAGE "BUS TEST"
21.15 COMMUNICATION µC1
21.16 MESSAGE RECEIVED?
21.17 TRY AGAIN <2 nd ATTEMP>
21.18 2 and ATTEMPT
21.19 INVERTER RUNNING?
21.20 UART COMMUNICATION µC1 PARA µC2 TO STOP INVERTER 21.21 MODULE'S ID IS THE LOWEST OF THE NETWORK?
21.22 KEEP "MASTER" MODULE
21.23 MODULE RUNNING IN "SLAVE" MODE?
21.24 START SKILLS TRANSFER
21.25 REQUEST OPERATING STATE OF ALL MODULES IN THE NETWORK
21.26 INTERRUPT ROUTINE
21.27 UPDATE MODULE LOWEST ID INTERNAL'S TABLE STATE
   ACTUAL STATE = "ON"
   TYPE = "1"
21.28 I2C
21.29 UPDATE NETWORK STATE'S TABLE EEPROM µC3
21.30 START SKILLS TRANSFER TO "SLAVE" MODULE <OLD "MASTER" MODULE>
21.31 SEND MESSAGE TO OLD "MASTER" MODULE TYPE = "0"
   <DECOMMISSIONING MODULE>
21.32 UPDADTE STATE'S INTERNAL TABLE OF OLD "MASTER" MODULE
21.33 MODULE's ID IS THE LOWEST?

## Claims

1. Autonomous module of production, monitoring, storage, ripple and photovoltaic electric power distribution, hereafter designated as MAPEF, **characterized by** comprising a single structure (1), a support structure (9), ground-mounted, photovoltaic panels (8) and a technical cabinet (10) which includes the charge controller (12), at least one storage battery (13), an inverter (14), the inverter control (15), the system of communications (16), the voltage / current control (17), at least one transformer (29) and an electrical cabinet (23) protected by a differential switch (24) and circuit breakers (25).

2. Autonomous module of production, monitoring, storage, ripple and photovoltaic electric power distribution, according to claim 1, **characterized by** a 20 m² exposed surface of photovoltaic panels.

3. Autonomous module of production, monitoring, storage, ripple and photovoltaic electric power distribution, according to claim 1, **characterized by** being able to work individually, connected to a plug or to the electric meter of the houses, or others.

4. Autonomous module of production, monitoring, storage, ripple and photovoltaic electric power distribution, according to claim 1, **characterized by** being able to work individually, through a low voltage "off-grid".

5. Autonomous module of production, monitoring, storage, ripple and photovoltaic electric power distribution, according to claim 1, **characterized by** being able to work in several module connected grid.

6. Autonomous module of production, monitoring, storage, ripple and photovoltaic electric power distribution, according to claim 1, **characterized by** having a communications system (16) and a logical circuit that performs the management of the control method and the communications management between modules.

7. Management control method and communications control of the autonomous module of production, monitoring, storage, ripple and photovoltaic electric power distribution **characterized by**:
a) the fact that the communications are established through digital messages in which the first bytes identify the MAPEF (1) ID and the remaining bytes the message itself;
b) the starting code is checked and validated after the system initialization;
c) if the code is incorrect, a message is sent to an alphanumeric LCD display, putting the module out of service, and the routine is finished;
d) if the code is correct, an ENABLE signal is sent to micro controller 1, starting the cycle of communication, both MAPEF (1) "master" (where the term "master" sets the MAPEF (1) that controls the operation of the entire grid), and the "slave" MAPEFs (1) (where the term "slave" refers to any and all other MAPEFs (1) that are part of the grid) using the CANbus protocol communications( 26);
e) microcontroller 2 that reads the voltage of the storage batteries (13), converting that value into a proportional equivalent signal to be interpreted by microcontroller 1;
f) if the value of the reading is inferior to the reference value, a message is sent to the LCD alphanumeric display with this information, being the routine finished;
g) if the value of the reading is higher than the reference value, microcontroller 3 will read the backup battery voltage;
h) if the value of the reading is inferior to the reference value, a message is sent to the LCD alphanumeric display with this information, and the routine is finished;
i) if the value of the reading is higher than the reference value, the room temperature is measured by using the digital entry of microcontroller 3;
j) in case there is no temperature sensor, a message is sent to the LCD alphanumeric display with this information, and the routine is finished;
k) if the temperature sensor is present, one needs to check if the temperature is lower than the control temperature, previously determined;
l) if the temperature reading exceeds the predetermined reference temperature, forced ventilation is driven by a PWM speed control, allowing the temperature to fall both in the IGBT power transistors, and in the control system and the charging system of the backup battery;
m) when the MAPEF (1) "master" starts a message is sent to the MAPEFs (1) "slave" with the purpose of obtaining information about their state;
n) if the MAPEF (1) "slave" has an inferior ID to the MAPEF (1) "master", the first takes over the role of the MAPEF (1) "master", as this function is be originally assigned to the most inferior grid identifier;
o) the MAPEF (1) "master" receives from each MAPEF (1) "slave" information about its state, draws an internal table of system states as the basis for managing the system, then sending each MAPEF (1) "slave" the start / stop command;
p) using a state table of the non-volatile memory backup system in which all the characteristics elements of the grid are kept, namely the role of each MAPEF (1) - "master" or "slave" - its ID identifier, its serial number, the number of hours of operation, the storage batteries level (13) and the current state of the MAPEF (1);
q) having a constant monitoring of the voltage / current conditions (17) in all MAPEF (1) modules and in the distribution grid (18), being the non-volatile memory of each MAPEF (1) module continuously updated;
r) when each MAPEF (1) "slave" receives the message from the MAPEF (1) "master", it executes that command and sends the MAPEF (1) "master" its operating state (ON, OFF, IDLE or UNKNOW) showing the on / off inverter state (14) and the level of the storage batteries loads (13), being this information transmitted to the CANbus network so they can be interpreted by other MAPEFs (1);
s) if it is necessary to increase the grid power distribution the MAPEF (1) "master", as it is responsible for the grid state updating, it sends a synchronized signal to the grid (through a signal clock - RTC), and a start command to a certain MAPEF (1) "slave" which has operating conditions, thus occurring the reverse process if it is necessary to reduce the grid power distribution;
t) the criterion for modules to start working and thus increase / decrease the grid power distribution (18) which is defined by the amount of energy stored in the storage batteries (13) or in a similar situation, the module with fewer operation hours or in a similar situation, the module with the lowest ID identifier;
u) existing a constant grid updating of the operation that the MAPEF (1) assumes as being the "master" or the "slave", depending on its availability to take over this function, depending on the possession of load in the storage batteries (13) and in the backup battery, of having or not having obstacles to its normal operation, or of having been turned off for repair reasons;
v) existing a constant monitoring of the MAPEF module (1) "master" to check if the MAPEFs modules (1) "slaves" are still active, existing internally on each "slave" module (1) a counter that if the communication does not take place it turns off by itself for safety reasons;
w) the system being real time interactive, preventing the grid from not having available power to feed the loads connected to it;
x) being cyclical and performing without interruption.
